# EUROPÄISCHE PATENTSCHRIFT

(11) **EP 3 492 253 B1**
(45) Veröffentlichungstag und Bekanntmachung des Hinweises auf die Patenterteilung: **19.08.2020**
(21) Anmeldenummer: 18194981.9
(22) Anmeldetag: 18.09.2018
(51) Int. Cl.: B29D 30/00, B29D 30/06

(54) **FAHRZEUGLUFTREIFEN, VULKANISATIONSWERKZEUG ZUR HERSTELLUNG EINES DERARTIGEN FAHRZEUGLUFTREIFENS UND VERFAHREN ZUR HERSTELLUNG EINES FAHRZEUGLUFTREIFENS UNTER VERWENDUNG EINES VULKANISATIONSWERKZEUGES**
PNEUMATIC VEHICLE TYRE, VULCANISATION TOOL FOR PRODUCING SUCH A PNEUMATIC TYRE AND METHOD FOR MANUFACTURING A PNEUMATIC TYRE FOR A VEHICLE USING A VULCANISATION TOOL
PNEUMATIQUES DE VÉHICULE, OUTIL DE VULCANISATION PERMETTANT DE FABRIQUER UN TEL PNEUMATIQUES DE VÉHICULE ET PROCÉDÉ DE FABRICATION DE PNEUMATIQUES DE VÉHICULE À L'AIDE D'UN OUTIL DE VULCANISATION

(30) Priorität: 01.12.2017 DE 102017221699
(43) Veröffentlichungstag der Anmeldung: 05.06.2019
(73) Patentinhaber: Continental Reifen Deutschland GmbH, 30165 Hannover (DE)
(72) Erfinder: Behr, Ulrich, 30167 Hannover (DE)
(74) Vertreter: Finger, Karsten

(56) Entgegenhaltungen:
- EP-A1- 2 088 007
- EP-A1- 2 711 202
- EP-A2- 2 368 725

## Beschreibung

Die Erfindung betrifft einen Fahrzeugluftreifen, ein Vulkanisationswerkzeug zur Herstellung eines derartigen Fahrzeugluftreifens und ein Verfahren zur Herstellung eines Fahrzeugluftreifens unter Verwendung eines Vulkanisationswerkzeuges.

Aus der DE 2014 212 346 A1 ist bereits ein Fahrzeugluftreifen bekannt, der eine profilierte Lauffläche aufweist, die beidseitig in je eine Seitenwand übergeht und deren Enden durch je einen Reifenwulst gebildet werden. Ein derartiger Fahrzeugluftreifen wird in einem ebenfalls beschriebenen Vulkanisationswerkzeug hergestellt, das aus mehreren, in radialer Richtung bewegbar angeordneten Profilsegmenten eines Segmentringes besteht, die der Erzeugung der Profilierung der Lauffläche des Fahrzeugluftreifens dienen. Darüber hinaus weist das Vulkanisationswerkzeug mehrere Seitenwandschalen zur Ausbildung der Seitenwände auf, wobei zwischen dem Segmentring und den Seitenwandschalen eine Formtrennebene definiert ist. Dies hat zur Folge, dass die einzelnen Elemente des Vulkanisationswerkzeuges voneinander getrennt werden können, um einen Reifenrohling, der auch als "grüner Reifen" bezeichnet wird, in das Vulkanisationswerkzeug einsetzen und den fertig gestellten, also vulkanisierten Fahrzeugluftreifen aus dem Vulkanisationswerkzeug entnehmen zu können. Die Formtrennebene ist dabei nicht zwangsläufig als eine durchgehende Ebene zu verstehen. Vielmehr kann sie innerhalb des Vulkanisationswerkzeuges auch abgesetzt oder gestuft sein. Letztlich stellt die Formtrennebene im weiteren Sinne mindestens eine Berührungsfläche zwischen den Seitenwandschalen und dem aus mehreren Profilsegmenten bestehenden Segmentring dar. Während des Schließens des Vulkanisationswerkzeuges ist es durch den Schließdruck nahezu unvermeidbar, dass Teile des Gummiwerkstoffes des Reifenrohlings zwischen die Seitenwandschalen und den Segmentring gepresst werden, was dazu führt, dass im Bereich der Formtrennebene Austriebe entstehen können. Zudem dringt beim Vulkanisieren überschüssiges Gummimaterial des in das Vulkanisationswerkzeug eingesetzten Reifenrohlings in die Formtrennebene ein, sodass am fertig vulkanisierten Fahrzeugluftreifen auch dadurch Austriebe entstehen, die zumeist einen kreisförmig, zwischen der Seitenwand und der Lauffläche umlaufenden, dünnen und abstehenden Gummifilm bilden. Diese Austriebe sind am Fahrzeugluftreifen jedoch nicht erwünscht und werden durch das so genannte "Trimmen", manuell mit hierfür geeigneten Trimmmessern entfernt. Damit das Trimmen der Austriebe leichter fällt, ist es bekannt, die Profilsegmente des Segmentringes und/oder die Seitenwandschalen derart auszubilden, dass auf einer oder auf beiden Seiten der Formtrennebene Gummikeile als umlaufende Rippen am Fahrzeugluftreifen ausgebildet werden, die aufgrund ihrer Erhöhung das Trimmen erleichtern sollen. Diese umlaufenden Rippen am Fahrzeugluftreifen erfordern jedoch zusätzliches Gummimaterial, sodass sich dadurch die Herstellungskosten und das Reifengewicht erhöhen, wobei Letzteres zu einer Verschlechterung der Aerodynamik des Fahrzeugluftreifens im Betriebszustand führt.
Die DE 2014 212 346 A1 offenbart zur Reduzierung der Entstehung der Austriebe eine Lösung, die darin besteht, dass entlang der Formtrennebene eine Nut verläuft, welche zum Teil in den Profilsegmenten und zum Teil in der jeweiligen Seitenwandschale ausgebildet ist, wobei sich die Formtrennebene am Boden der Nut befindet. Der dadurch am Fahrzeugluftreifen entstehende Vorsprung ermöglicht einen sauberen Schnitt beim Abtrennen der Austriebe. Dabei wird ausgeführt, dass der Vorsprung komplett, teilweise oder größtenteils abgeschnitten werden kann, sodass dieser Bereich sehr gut trimmbar ist und auch im Vorsprung gegebenenfalls ausgebildete Stufen, die durch ein etwaiges Verschieben der Formteile des Vulkanisationswerkzeuges relativ zueinander gebildet worden sind, entfernt werden können. Auf besonders einfache und rationelle Weise wird damit ein teilweises oder komplettes Abschneiden der Vorsprünge möglich, die gemäß des Offenbarungsgehaltes der Druckschrift im Querschnitt dreieckförmig oder gerundet oder zum Beispiel kuppelförmig gerundet, ausgeführt sind. Auch die Dimensionierung der Vorsprünge spielt laut der DE 2014 212 346 A1 eine gewisse Rolle, da sich sowohl zu große als auch zu kleine Vorsprünge schwieriger abschneiden lassen. Es wird daher in der Druckschrift als vorteilhaft beschrieben, wenn die Vorsprünge am Reifen eine Höhe von 1,5 mm bis 2,5 mm und an ihrer Basis an der Seitenwand eine Breite von ebenfalls 1,5 mm bis 2,5 mm aufweisen. Anders ausgedrückt weisen die Vorsprünge eine gleichmäßige Geometrie auf.

Aus der DE 10 2009 044 362 A1 ist es darüber hinaus bekannt, in den Seitenwandschalen und/oder den Profilsegmenten des Segmentringes des Vulkanisationswerkzeuges an oder nahe des Bereiches der Formtrennebene und entlang dieser, einzelne, in axialer Richtung verlaufende Kanäle vorzusehen. Es werden daher in dem Vulkanisationswerkzeug für überschüssiges Gummimaterial gezielt Aufnahmeräume für überschüssiges Gummimaterial zur Verfügung gestellt. In dem ebenfalls beschriebenen, fertig gestellten Fahrzeugluftreifen entstehen dadurch einzelne, kleine, stiftartige Gummigrate, die sich leichter entfernen lassen sollen als die sonst üblichen Austriebe. Es hat sich jedoch herausgestellt, dass sich auch diese einzelnen, stiftartigen Austriebe relativ schwer trimmen lassen, da sie recht flexibel sind und sich dadurch vom Trimmmesser nicht gut erfassen lassen.

Die DE 696 00 888 T2 betrifft einen Fahrzeugluftreifen, bei dem im Bereich der Formtrennebene eine Mehrzahl von Vertiefungen und eine Umfangsnut vorgesehen sind, wobei jede Vertiefung eine Tiefe von 0,5 mm bis 5,0 mm und eine maximale Umfangslinie von 5,0 mm bis 10,0 mm aufweist. Eine derartige Lösung hat den Nachteil, dass der Schulterbereich des Fahrzeugluftreifens, der sich im Übergang zwischen der Lauffläche und der Seitenwand befindet, relativ stark strukturiert ist, was wiederum dazu führt, dass sich die Aerodynamik des Fahrzeugluftreifens verschlechtert. Dies kann neben einer Verschlechterung des Kraftstoffverbrauchs des mit dem Fahrzeugluftreifen ausgestatteten Kraftfahrzeuges auch zur Folge haben, dass eine verstärkte Geräuschentwicklung im Betriebszustand des Fahrzeugluftreifens zu verzeichnen ist.

Die EP 2 368 725 A2, Fig. 3 legt die Merkmale der Oberbegriff der unabhängigen Ansprüche 1, 9 und 10 offen.

Aus dem bekannten Stand der Technik ergibt sich, dass bisher noch keine befriedigende Lösung gefunden wurde, einen Fahrzeugluftreifen mittels eines Vulkanisationswerkzeuges herzustellen, der aerodynamisch günstig gestaltet ist, keine Anfälligkeit für Rissbildungen aufweist und bei dem die nicht vermeidbaren Austriebe sich auf einfache Weise und mit wenig Aufwand vom Fahrzeugluftreifen entfernen lassen. Durch das Trimmen kann bisher sogar die Seitenwand des Fahrzeugluftreifens beschädigt werden, wenn das Trimmmesser nicht hundertprozentig exakt geführt wird. Dies ist jedoch bei einer manuellen Tätigkeit nicht immer zu gewährleisten.

Der Erfindung liegt die Aufgabe zugrunde, einen Fahrzeugluftreifen bereitzustellen, der aerodynamisch günstig ausgeführt ist und Austriebe aufweist, die mit zuverlässiger Qualität und auf einfache Weise sowie mit geringem Aufwand vom Fahrzeugluftreifen abgetrennt werden können, ohne dass dabei Beschädigungen der Seitenwand entstehen. Darüber hinaus ist ein Vulkanisationswerkzeug anzugeben, mit dem ein derartiger Fahrzeugluftreifen hergestellt werden kann. Ferner besteht die Aufgabe der Erfindung darin, ein Verfahren zu definieren, mit dem der Fahrzeugluftreifen in dem Vulkanisationswerkzeug herstellbar ist.

Die Erfindung löst diese Aufgabenstellung mit den Merkmalen der unabhängigen Patentansprüche 1, 9 und 10.
Weitere Ausgestaltungen der Erfindung sind Gegenstand der sich anschließenden Unteransprüche.

Ein Fahrzeugluftreifen, mit einer profilierten Lauffläche, die beidseitig in je eine Seitenwand übergeht, deren Enden durch je einen Reifenwulst gebildet werden und der in einem Vulkanisationswerkzeug hergestellt ist, das aus mehreren, in radialer Richtung bewegbar angeordneten Profilsegmenten eines Segmentringes, zur Profilierung der Lauffläche und aus mehreren, vorzugsweise aus zwei Seitenwandschalen zur Ausbildung der Seitenwände besteht, wobei zwischen dem Segmentring und den Seitenwandschalen eine Formtrennebene definiert ist, wurde erfindungsgemäß dahingehend weitergebildet, dass der Fahrzeugluftreifen an seiner durch die Laufrichtung des Fahrzeugluftreifens definierten Außenseite eine zumindest abschnittsweise, in Umfangsrichtung verlaufende, von der Seite der Lauffläche ausgehend, in Richtung des Reifenwulstes orientierte, zunächst rampenartig ansteigende Erhebung aufweist und eine sich an die Erhebung anschließende Plateaufläche in eine zweite, in Relation zur ersten Erhebung des Fahrzeugluftreifens höhere Erhebung mit einer zweiten Plateaufläche übergeht.

Die Erfindung geht einen vollkommen neuen Weg. Hier wird nicht einfach ein wulstförmiger Vorsprung an der Außenseite der Seitenwand des Fahrzeugluftreifens vorgesehen, sondern eine speziell gestaltete Kontur mit einer rampenartig ansteigenden Erhebung, an der das Trimmmesser optimal angesetzt und entlanggeführt werden kann, was dazu führt, dass der entstandene Austrieb nahezu rückstandsfrei entfernt werden kann, ohne dass dabei Beschädigungen des Fahrzeugluftreifens zu verzeichnen sind. Ein weiterer, sehr wesentlicher Vorteil dieser Lösung besteht darin, dass durch die gegebene Möglichkeit der vollständigen Abtrennung des Austriebs, der Fahrzeugluftreifen eine optimierte, gleichmäßige Außenoberfläche der Seitenwand und damit eine verbesserte Aerodynamik im Vergleich mit herkömmlichen Fahrzeugluftreifen aufweist. Dies führt zu einer Reduzierung der während des Fahrbetriebs entstehenden Geräusche und zu einer Reduzierung des Kraftstoffverbrauchs des mit dem Fahrzeugluftreifen ausgestatteten Kraftfahrzeugs.

Einer ersten Ausgestaltung der Erfindung entsprechend ist die Formtrennebene im Übergang zwischen der ersten Plateaufläche und der zweiten, bevorzugt ebenfalls rampenartig ansteigenden Erhebung angeordnet, was bedeutet, dass die Formtrennebene etwa mittig zwischen den Plateauflächen verläuft.
Der Vorteil einer derartigen Lösung ist darin zu sehen, dass die Werkzeughälften des Vulkanisationswerkzeuges problemlos voneinander getrennt werden können und ihre Herstellung wesentlich vereinfacht ist.

Der erfindungsgemäße Fahrzeugluftreifen kann in vorteilhafter Weise auch derart ausgeführt werden, dass die erste Plateaufläche und/oder die zweite Plateaufläche als ein Ring an der Außenseite der Seitenwand des Fahrzeugluftreifens ausgebildet ist, deren Oberfläche äquidistant zur Außenseite der Seitenwand verläuft.

Am Fahrzeugluftreifen ergeben sich dadurch zwei benachbarte und entsprechend hohe sowie breite Ringe, deren Abtrennung durch die Erhebungen vereinfacht ist.

Der Übergang der Plateauflächen zur Oberfläche der Seitenwand des Fahrzeugluftreifens kann unterschiedlich gestaltet und entsprechend einer weiterbildenden Maßnahme der Erfindung derart ausgeführt sein, dass die zweite Plateaufläche einen Übergang zur Seitenwand aufweist, dessen Höhe in Relation zur Außenseite der Seitenwand des Fahrzeugluftreifens geringer ist als die Höhe der zweiten Erhebung. Mit anderen Worten ausgedrückt weist zumindest die zweite Plateaufläche im Querschnitt betrachtet eine Neigung zur Außenoberfläche der Seitenwand des Fahrzeugluftreifens auf. Selbstverständlich können beide Plateauflächen über eine derartige Neigung verfügen. Auf diese Weise kann erreicht werden, dass von der ersten Erhebung ausgehend eine stufenweise Absenkung der gesamten Ausformung des Fahrzeugluftreifens im Bereich der entstehenden Austriebe gegeben ist. Damit steht in diesem Bereich genügend Gummiwerkstoff zur Verfügung, um das Trimmmesser optimal führen und den gesamten Austrieb gleichmäßig abtrennen zu können.

Eine alternative Lösung zu der zuvor beschriebenen Ausführung beziehungsweise Anordnung der zweiten Plateaufläche besteht darin, dass die zweite Plateaufläche zu der Oberfläche der Seitenwand des Fahrzeugluftreifens auslaufend ausgeführt ist und nahtlos in die Seitenwand übergeht. Damit wird ein insgesamt sehr gleichmäßiger Übergang des Austriebs zur Außenoberfläche der Seitenwand geschaffen.

Der gesamte Austrieb weist eine lokal begrenzte Fläche an der Seitenwand des Fahrzeugluftreifens auf. Dies ist erforderlich, um ihn mittels eines Trimmmessers optimal abtrennen zu können. Daher ist es von Vorteil, wenn die im Sinne des Verlaufs der Plateaufläche, ausgehend von der Lauffläche, in Richtung Reifenwulst zu betrachtende Breite der Plateauflächen zwischen 0,5 mm und 4 mm beträgt. Eine bevorzugte Breite der Plateauflächen beträgt jedoch lediglich 1 mm.

Allgemein ausgedrückt liegt dieser Ausführungsvariante die Idee zu Grunde, die Plateauflächen jeweils mit gleichen Breiten auszustatten, wobei unterschiedliche Breiten ebenfalls möglich sind.

Darüber hinaus ist es von Vorteil, wenn die Höhe der Erhebung vor der ersten Plateaufläche zwischen 0,2 mm und 1 mm niedriger ausgelegt ist, als die Höhe der zweiten Erhebung. Bevorzugt wird hierbei eine Höhe von 0,3 mm. Dabei ist es ebenfalls möglich, beide Erhebungen jeweils mit einer Höhe von 0,2 mm bis 1 mm, bevorzugt mit einer Höhe von 0,3 mm auszustatten.

Das erfindungsgemäße Vulkanisationswerkzeug zur Herstellung eines Fahrzeugluftreifens, wie er zuvor beschrieben wurde, weist mehrere, in radialer Richtung bewegbar angeordnete Profilsegmente eines Segmentringes zur Profilierung der Lauffläche und mehrere Seitenwandschalen zur Ausbildung der Seitenwände auf, wobei zwischen dem Segmentring und den Seitenwandschalen eine Formtrennebene definiert ist, der Segmentring eine zu der ersten Erhebung und dem ersten Plateau komplementäre Ausnehmung aufweist und die Seitenwandschalen eine zu der zweiten Erhebung und dem zweiten Plateau komplementäre Ausnehmung aufweisen.

Demnach ist das Vulkanisationswerkzeug derart ausgebildet, dass die Austriebe des in dem Vulkanisationswerkzeug zu erzeugenden Fahrzeugluftreifens in die vorgegebene Geometrie des Vulkanisationswerkzeuges vordringen und dabei die spezielle, erfindungsgemäße Oberflächenstruktur an der Seitenwand des Fahrzeugluftreifens erzeugen, die später mit einem Trimmmesser abgetrennt wird. Da diese speziellen Geometrien unmittelbar in das Vulkanisationswerkzeug eingearbeitet sind, ist kein zusätzlicher Fertigungsaufwand erforderlich, um die Erhebungen und Plateaus an dem Fahrzeugluftreifen auszubilden.

Das erfindungsgemäße Verfahren zur Herstellung eines Fahrzeugluftreifens unter Verwendung eines zuvor beschriebenen Vulkanisationswerkzeuges ist durch folgende Verfahrensschritte gekennzeichnet:
- Einbringung eines Reifenrohlings oder "grünen Reifens" in das aus mehreren, in radialer Richtung bewegbar angeordneten Profilsegmenten eines Segmentringes, zur Profilierung der Lauffläche und aus mehreren Seitenwandschalen zur Ausbildung der Seitenwände bestehende Vulkanisationswerkzeug, bei dem zwischen dem Segmentring und den Seitenwandschalen eine Formtrennebene definiert ist,
- Schließen des Vulkanisationswerkzeuges und Ausbildung des Fahrzeugluftreifens durch Erhitzung des Vulkanisationswerkzeuges auf die Vulkanisationstemperatur,
- Entnahme des dadurch erzeugten Fahrzeugluftreifens aus dem Vulkanisationswerkzeug,
- Abtrennen der Erhebungen und der Plateaus bis auf die Oberfläche der Außenseite (7) der Seitenwand des Fahrzeugluftreifens.

Wie zuvor bereits ausgeführt wurde, erfolgt das Abtrennen durch ein Schneidverfahren, bei dem es sich bevorzugt um ein Schneiden mittels eines Trimmmessers handelt.

Dabei kann das Abtrennen manuell oder automatisiert erfolgen. Eine automatisierte Abtrennung, die beispielsweise mittels eines hierfür geeigneten Roboters erfolgen kann, spart dabei zusätzliche Arbeitszeit und Arbeitskräfte, sodass auch die manuellen Tätigkeiten bei der Herstellung eines Fahrzeugluftreifens erheblich reduziert werden können.

Die Erfindung wird nachfolgend anhand der beigefügten Zeichnungen näher erläutert. Das gezeigte Ausführungsbeispiel stellt dabei keine Einschränkung auf die dargestellte Variante dar, sondern dient lediglich der Erläuterung eines Prinzips der Erfindung.
Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.
Es zeigt:
- Figur 1:: ausschnittsweise einen Querschnitt durch einen in ein Vulkanisationswerkzeug eingesetzten Fahrzeugluftreifen
und
- Figur 2:: den vergrößerten Ausschnitt II aus Figur 1.

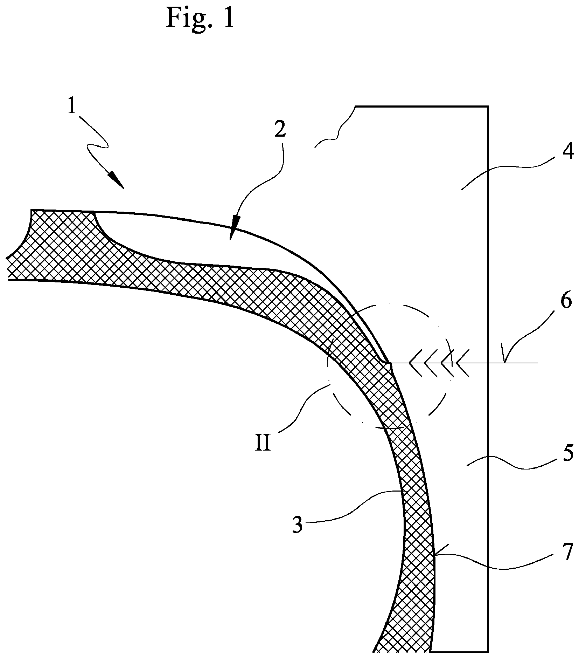

In der Figur 1 ist ausschnittsweise ein Querschnitt durch einen Fahrzeugluftreifen 1 dargestellt, der in ein Vulkanisationswerkzeug eingesetzt ist und in an sich bekannter Weise eine mit einem Laufflächenprofil ausgestattete Lauffläche 2 aufweist, die beidseitig in je eine Seitenwand 3 übergeht. Die Seitenwand 3 endet in einem Reifenwulst, der zur luftdichten Einlage des Fahrzeugluftreifens 1 in einer Felge eines Fahrzeugrades dient, wobei der Reifenwulst und die Felge in der Figur 1 nicht dargestellt sind. Das Vulkanisationswerkzeug besteht aus einem Segmentring 4, der seinerseits aus mehreren, in radialer Richtung bewegbar angeordneten Profilsegmenten zusammengesetzt ist, sodass das Vulkanisationswerkzeug geöffnet und geschlossen werden kann, um den Reifenrohling, der auch als "grüner Reifen" bezeichnet wird, in das Vulkanisationswerkzeug einlegen und den Fahrzeugluftreifen 1 nach seiner Fertigstellung aus dem Vulkanisationswerkzeug entnehmen zu können. Der abnehmbare Segmentring 4 ist unter Bildung einer Abdichtung mit mehreren Seitenwandschalen 5 lösbar verbunden, wobei der Verbindungsbereich eine Formtrennebene 6 bildet. Die Seitenwandschalen 5 sind dazu ausgelegt, die Seitenwände 3 des Fahrzeugluftreifens 1 auszubilden, wenn dieser in dem Vulkanisationswerkzeug vulkanisiert wird. Dabei weist die Innenoberfläche der Seitenwandschalen 5 eine zu den Außenseiten 7 der Seitenwände 3 komplementäre Geometrie auf.

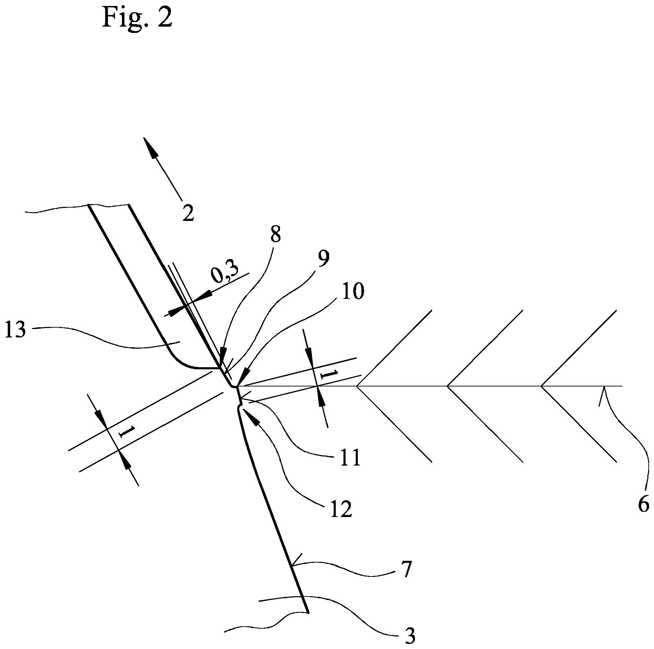

Die erfindungsgemäße Besonderheit wird deutlicher aus dem vergrößerten Ausschnitt II aus Figur 1, der Gegenstand der Darstellung in der Figur 2 ist. Im Bereich der Formtrennebene 6 wird der Fahrzeugluftreifen 1 erfindungsgemäß mit einer Geometrie ausgestattet, die sich nach seiner Fertigstellung mittels eines Trimmmessers auf einfache Weise abtrennen lässt. Betrachtet man die Außenseite 7 der Seitenwand 3 des Fahrzeugluftreifens 1 ausgehend von der Lauffläche 2 in Richtung des in der Figur 2 nicht dargestellten Reifenwulstes, also entgegen der Richtung des Pfeils "2", so besteht die als Austrieb zu bezeichnende, erhabene Geometrie zunächst aus einer rampenartig ansteigenden Erhebung 8, die in eine Plateaufläche 9 übergeht, deren Breite bei dem dargestellten Beispiel etwa 1 mm beträgt. Hierbei ist zu beachten, dass sowohl die Erhebung 8, als auch die Plateaufläche 9 in der Figur 2 als Querschnitt dargestellt sind und daher am Fahrzeugluftreifen 1 folglich jeweils einen in Umfangsrichtung umlaufenden Ring bilden. Dies trifft auch für die sich an die Plateaufläche 9 in Richtung des Reifenwulstes anschließende, zweite, ebenfalls rampenartig ansteigende Erhebung 10 und die dieser nachfolgende, zweite Plateaufläche 11 zu.
Die Besonderheit besteht vorliegend darin, dass die erste Plateaufläche 9 und damit auch die erste Erhebung 8 bei dem dargestellten Beispiel 0,3 mm niedriger ausgeführt sind, als die nachfolgende, zweite Erhebung 10.
Eine weitere Besonderheit besteht bei der in Figur 2 gezeigten darin, dass die zweite Plateaufläche 11 eine Neigung zur Außenseite 7 der Seitenwand 3 aufweist, was bedeutet, dass die zweite Plateaufläche 11 einen Übergang 12 zur Seitenwand 3 aufweist, dessen Höhe in Relation zur Außenseite 7 der Seitenwand 3 des Fahrzeugluftreifens 1 geringer ist als die Höhe der zweiten Erhebung 10.
Weiterhin gilt es vorliegend zu beachten, dass die Plateauflächen 9 und 11 in diesem Fall die gleiche Breite von vorliegend 1 mm aufweisen. Die Formtrennebene 6 liegt dabei genau zwischen den Plateauflächen 9 und 11, also im Bereich der zweiten Erhebung 10. Die ausschnittsweise vergrößerte Schnittdarstellung in Figur 2 verläuft durch eine Profilvertiefung des Fahrzeugluftreifens 1, sodass im oberen, laufflächenseitigen Abschnitt des dargestellten Teils des Fahrzeugluftreifens 1 eine Profilausnehmung 13 erkennbar ist.

### Bezugszeichenliste

- 1: Fahrzeugluftreifen
- 2: Lauffläche
- 3: Seitenwand
- 4: Segmentringes
- 5: Seitenwandschale
- 6: Formtrennebene
- 7: Außenseite
- 8: Erhebung
- 9: Plateaufläche
- 10: Erhebung
- 11: Plateaufläche
- 12: Übergang
- 13: Profilausnehmung

## Patentansprüche

1. Fahrzeugluftreifen (1), mit einer profilierten Lauffläche (2), die beidseitig in je eine Seitenwand (3) übergeht, deren Enden durch je einen Reifenwulst gebildet werden und der in einem Vulkanisationswerkzeug hergestellt ist, das aus mehreren, in radialer Richtung bewegbar angeordneten Profilsegmenten eines Segmentringes (4), zur Profilierung der Lauffläche (2) und aus mehreren Seitenwandschalen (5) zur Ausbildung der Seitenwände (3) besteht, wobei zwischen dem Segmentring (4) und den Seitenwandschalen (5) eine Formtrennebene (6) definiert ist,
**dadurch gekennzeichnet, dass**
der Fahrzeugluftreifen (1) an seiner durch die Laufrichtung des Fahrzeugluftreifens (1) definierten Außenseite (7) eine zumindest abschnittsweise, in Umfangsrichtung verlaufende, von der Seite der Lauffläche (2) ausgehend, in Richtung des Reifenwulstes orientierte, zunächst rampenartig ansteigende Erhebung (8) aufweist und eine sich an die Erhebung (8) anschließende Plateaufläche (9) in eine zweite, in Relation zur ersten Erhebung (8) des Fahrzeugluftreifens (1) höhere Erhebung (10) mit einer zweiten Plateaufläche (11) übergeht.

2. Fahrzeugluftreifen nach Anspruch 1,
**dadurch gekennzeichnet, dass**
die Formtrennebene (6) im Übergang zwischen der ersten Plateaufläche (9) und der zweiten Erhebung (10) angeordnet ist.

3. Fahrzeugluftreifen nach einem der vorstehend genannten Ansprüche,
**dadurch gekennzeichnet, dass**
die erste Plateaufläche (9) und/oder die zweite Plateaufläche (11) als ein Ring an der Außenseite (7) der Seitenwand (3) des Fahrzeugluftreifens (1) ausgebildet ist, deren Oberfläche äquidistant zur Außenseite (7) der Seitenwand (3) verläuft.

4. Fahrzeugluftreifen nach einem der Ansprüche 1 oder 2,
**dadurch gekennzeichnet, dass**
die zweite Plateaufläche (11) einen Übergang (12) zur Seitenwand (3) aufweist, dessen Höhe in Relation zur Außenseite (7) der Seitenwand (3) des Fahrzeugluftreifens (1) geringer ist als die Höhe der zweiten Erhebung (10).

5. Fahrzeugluftreifen nach einem der Ansprüche 1 oder 2,
**dadurch gekennzeichnet, dass**
die zweite Plateaufläche (11) zu der Oberfläche der Seitenwand (3) des Fahrzeugluftreifens (1) auslaufend ausgeführt ist und nahtlos in die Seitenwand (3) übergeht.

6. Fahrzeugluftreifen nach einem der vorstehend genannten Ansprüche,
**dadurch gekennzeichnet, dass**
die im Sinne des Verlaufs der Plateaufläche, ausgehend von der Lauffläche (2), in Richtung Reifenwulst zu betrachtende Breite der Plateauflächen (9, 11) zwischen 0,5 mm und 4 mm beträgt.

7. Fahrzeugluftreifen nach einem der vorstehend genannten Ansprüche,
**dadurch gekennzeichnet, dass**
die Plateauflächen (9, 11) jeweils die gleiche Breite aufweisen.

8. Fahrzeugluftreifen nach einem der vorstehend genannten Ansprüche,
**dadurch gekennzeichnet, dass**
die Höhe der Erhebung (8) vor der ersten Plateaufläche (9) zwischen 0,2 mm und 1 mm niedriger ausgelegt ist, als die Höhe der zweiten Erhebung (11).

9. Vulkanisationswerkzeug zur Herstellung eines Fahrzeugluftreifens (1) nach einem der vorstehend genannten Ansprüche, wobei das Vulkanisationswerkzeug mehrere, in radialer Richtung bewegbar angeordnete Profilsegmente eines Segmentringes (4) zur Profilierung der Lauffläche (2) und mehrere Seitenwandschalen (5) zur Ausbildung der Seitenwände (3) aufweist und zwischen dem Segmentring (4) und den Seitenwandschalen (5) eine Formtrennebene (6) definiert ist,
**dadurch gekennzeichnet, dass**
der Segmentring (4) eine zu der ersten Erhebung (8) und dem ersten Plateau (9) komplementäre Ausnehmung aufweist und die Seitenwandschalen (5) eine zu der zweiten Erhebung (10) und dem zweiten Plateau (11) komplementäre Ausnehmung aufweisen.

10. Verfahren zur Herstellung eines Fahrzeugluftreifens (1) nach einem der vorstehend genannten Ansprüche 1 bis 8 unter Verwendung eines Vulkanisationswerkzeuges nach Anspruch 9,
**gekennzeichnet durch** folgende Verfahrensschritte:
- Einbringung eines Reifenrohlings oder "grünen Reifens" in das aus mehreren, in radialer Richtung bewegbar angeordneten Profilsegmenten eines Segmentringes (4), zur Profilierung der Lauffläche (2) und aus mehreren Seitenwandschalen (5) zur Ausbildung der Seitenwände (3) bestehende Vulkanisationswerkzeug, bei dem zwischen dem Segmentring (4) und den Seitenwandschalen (5) eine Formtrennebene (6) definiert ist,
- Schließen des Vulkanisationswerkzeuges und Ausbildung des Fahrzeugluftreifens (1) durch Erhitzung des Vulkanisationswerkzeuges auf die Vulkanisationstemperatur,
- Entnahme des dadurch erzeugten Fahrzeugluftreifens (1) aus dem Vulkanisationswerkzeug,
- Abtrennen der Erhebungen (8, 10) und der Plateauflächen (9, 11) bis auf die Oberfläche der Außenseite (7) der Seitenwand (3) des Fahrzeugluftreifens (1).

11. Verfahren nach Anspruch 10,
**dadurch gekennzeichnet, dass**
das Abtrennen ein Schneidverfahren ist.

12. Verfahren nach Anspruch 10 oder 11,
**dadurch gekennzeichnet, dass**
das Abtrennen manuell oder automatisiert erfolgt.

## Claims

1. Pneumatic vehicle tyre (1), with a profiled tread (2), which goes over on each of both sides into a sidewall (3), the ends of which are each formed by a tyre bead and which is produced in a vulcanizing mould, which consists of multiple profile segments of a segment ring (4) arranged movably in the radial direction, for profiling the tread (2), and of multiple sidewall shells (5), for forming the sidewalls (3), a mould parting plane (6) being defined between the segment ring (4) and the sidewall shells (5),
**characterized in that**
the pneumatic vehicle tyre (1) has on its outer side (7), defined by the running direction of the pneumatic vehicle tyre (1), an elevation (8) at least in certain portions, which runs in the circumferential direction, proceeding from the side of the tread (2) is oriented in the direction of the tyre bead and initially rises in a ramp-like manner, and a plateau surface (9) adjoining the elevation (8) goes over into a second elevation (10), which is higher in relation to the first elevation (8) of the pneumatic vehicle tyre (1) and has a second plateau surface (11).

2. Pneumatic vehicle tyre according to Claim 1,
**characterized in that**
the mould parting plane (6) is arranged at the transition between the first plateau surface (9) and the second elevation (10).

3. Pneumatic vehicle tyre according to one of the preceding claims,
**characterized in that**
the first plateau surface (9) and/or the second plateau surface (11) is formed as a ring on the outer side (7) of the sidewall (3) of the pneumatic vehicle tyre (1), the surface of which runs equidistantly from the outer side (7) of the sidewall (3).

4. Pneumatic vehicle tyre according to either of Claims 1 and 2,
**characterized in that**
the second plateau surface (11) has a transition (12) to the sidewall (3) of which the height in relation to the outer side (7) of the sidewall (3) of the pneumatic vehicle tyre (1) is lower than the height of the second elevation (10).

5. Pneumatic vehicle tyre according to either of Claims 1 and 2,
**characterized in that**
the second plateau surface (11) is designed as running out in relation to the surface of the sidewall (3) of the pneumatic vehicle tyre (1) and goes over seamlessly into the sidewall (3).

6. Pneumatic vehicle tyre according to one of the preceding claims,
**characterized in that**
the width of the plateau surfaces (9, 11), in the sense of how the plateau surface, proceeding from the tread (2), extends in the direction of the tyre bead, is between 0.5 mm and 4 mm.

7. Pneumatic vehicle tyre according to one of the preceding claims,
**characterized in that**
the plateau surfaces (9, 11) are each of the same width.

8. Pneumatic vehicle tyre according to one of the preceding claims,
**characterized in that**
the height of the elevation (8) ahead of the first plateau surface (9) is designed to be between 0.2 mm and 1 mm lower than the height of the second elevation (11) .

9. Vulcanizing mould for producing a pneumatic vehicle tyre (1) according to one of the preceding claims, the vulcanizing mould having multiple profile segments of a segment ring (4) arranged movably in the radial direction, for profiling the tread (2), and multiple sidewall shells (5), for forming the sidewalls (3), and a mould parting plane (6) being defined between the segment ring (4) and the sidewall shells (5),
**characterized in that**
the segment ring (4) has a recess that complements the first elevation (8) and the first plateau (9), and the sidewall shells (5) have a recess that complements the second elevation (10) and the second plateau (11).

10. Method for producing a pneumatic vehicle tyre (1) according to one of the preceding Claims 1 to 8 using a vulcanizing mould according to Claim 9,
**characterized by** the following method steps:
- introducing a tyre blank or "green tyre" into the vulcanizing mould consisting of multiple profile segments of a segment ring (4) arranged movably in the radial direction, for profiling the tread (2), and of multiple sidewall shells (5), for forming the sidewalls (3), in which a mould parting plane (6) is defined between the segment ring (4) and the sidewall shells (5),
- closing the vulcanizing mould and forming the pneumatic vehicle tyre (1) by heating the vulcanizing mould to the vulcanizing temperature,
- removing the pneumatic vehicle tyre (1) thereby produced from the vulcanizing mould,
- detaching the elevations (8, 10) and the plateau surfaces (9, 11) down to the surface of the outer side (7) of the sidewall (3) of the pneumatic vehicle tyre (1).

11. Method according to Claim 10,
**characterized in that**
the detaching is a cutting process.

12. Method according to Claim 10 or 11,
**characterized in that**
the detaching is performed in a manual or automated manner.

## Revendications

1. Pneu de véhicule (1), ayant une surface de roulement profilée (2), qui se transforme des deux côtés à chaque fois en une paroi latérale (3), dont les extrémités sont formées à chaque fois par un bourrelet de pneu et qui est fabriqué dans un outil de vulcanisation, qui est constitué par plusieurs segments de profilé, agencés de manière mobile dans la direction radiale, d'un anneau segmenté (4) pour le profilage de la surface de roulement (2) et par plusieurs enveloppes de paroi latérale (5) pour la formation des parois latérales (3), un plan de démoulage (6) étant défini entre l'anneau segmenté (4) et les enveloppes de paroi latérale (5),
**caractérisé en ce que**
le pneu de véhicule (1) comprend, sur son côté extérieur (7) défini par la direction de roulement du pneu de véhicule (1), un soulèvement (8) croissant tout d'abord en forme de rampe, au moins en sections, s'étendant dans la direction circonférentielle, partant du côté de la surface de roulement (2), orienté dans la direction du bourrelet de pneu, et une surface de plateau (9) suivant le soulèvement (8) se transforme en un deuxième soulèvement (10) plus élevé par rapport au premier soulèvement (8) du pneu de véhicule (1) avec une deuxième surface de plateau (11).

2. Pneu de véhicule selon la revendication 1, **caractérisé en ce que** le plan de démoulage (6) est agencé dans la transition entre la première surface de plateau (9) et le deuxième soulèvement (10).

3. Pneu de véhicule selon l'une quelconque des revendications précédentes, **caractérisé en ce que** la première surface de plateau (9) et/ou la deuxième surface de plateau (11) sont configurées sous la forme d'un anneau sur le côté extérieur (7) de la paroi latérale (3) du pneu de véhicule (1), dont la surface est équidistante au côté extérieur (7) de la paroi latérale (3).

4. Pneu de véhicule selon l'une quelconque des revendications 1 ou 2, **caractérisé en ce que** la deuxième surface de plateau (11) comprend une transition (12) vers la paroi latérale (3), dont la hauteur par rapport au côté extérieur (7) de la paroi latérale (3) du pneu de véhicule (1) est plus faible que la hauteur du deuxième soulèvement (10).

5. Pneu de véhicule selon l'une quelconque des revendications 1 ou 2, **caractérisé en ce que** la deuxième surface de plateau (11) est configurée sous forme effilée vers la surface de la paroi latérale (3) du pneu de véhicule (1) et se transforme sans soudure en la paroi latérale (3).

6. Pneu de véhicule selon l'une quelconque des revendications précédentes, **caractérisé en ce que** la largeur des surfaces de plateau (9, 11) au sens de l'extension de la surface de plateau, à partir de la surface de roulement (2), dans la direction du bourrelet de pneu, est comprise entre 0,5 mm et 4 mm.

7. Pneu de véhicule selon l'une quelconque des revendications précédentes, **caractérisé en ce que** les surfaces de plateau (9, 11) présentent chacune la même largeur.

8. Pneu de véhicule selon l'une quelconque des revendications précédentes, **caractérisé en ce que** la hauteur du soulèvement (8) avant la première surface de plateau (9) est conçue sous une forme entre 0,2 mm et 1 mm inférieure à la hauteur du deuxième soulèvement (11) .

9. Outil de vulcanisation pour la fabrication d'un pneu de véhicule (1) selon l'une quelconque des revendications précédentes, dans lequel l'outil de vulcanisation comprend plusieurs segments de profilé, agencés de manière mobile dans la direction radiale, d'un anneau segmenté (4) pour le profilage de la surface de roulement (2) et plusieurs enveloppes de paroi latérale (5) pour la formation des parois latérales (3), et un plan de démoulage (6) est défini entre l'anneau segmenté (4) et les enveloppes de paroi latérale (5),
**caractérisé en ce que**
l'anneau segmenté (4) comprend un évidement complémentaire du premier soulèvement (8) et du premier plateau (9) et les enveloppes de paroi latérale (5) comprennent un évidement complémentaire du deuxième soulèvement (10) et du deuxième plateau (11).

10. Procédé de fabrication d'un pneu de véhicule (1) selon l'une quelconque des revendications 1 à 8 précédentes utilisant un outil de vulcanisation selon la revendication 9, **caractérisé par** les étapes de procédé suivantes :
- l'introduction d'une ébauche de pneu ou d'un « pneu vert » dans l'outil de vulcanisation constitué par plusieurs segments de profilé, agencés de manière mobile dans la direction radiale, d'un anneau segmenté (4) pour le profilage de la surface de roulement (2) et par plusieurs enveloppes de paroi latérale (5) pour la formation des parois latérales (3), un plan de démoulage (6) étant défini entre l'anneau segmenté (4) et les enveloppes de paroi latérale (5),
- la fermeture de l'outil de vulcanisation et la formation du pneu de véhicule (1) par chauffage de l'outil de vulcanisation à la température de vulcanisation,
- l'extraction du pneu de véhicule (1) ainsi formé de l'outil de vulcanisation,
- la séparation des soulèvements (8, 10) et des surfaces de plateau (9, 11) à l'exception de la surface du côté extérieur (7) de la paroi latérale (3) du pneu de véhicule (1).

11. Procédé selon la revendication 10, **caractérisé en ce que** la séparation est un procédé de découpe.

12. Procédé selon la revendication 10 ou 11, **caractérisé en ce que** la séparation a lieu de manière manuelle ou automatisée.
